# EUROPEAN PATENT APPLICATION

(11) **EP 2 339 529 A1**
(43) Date of publication of application: **29.06.2011**
(21) Application number: 09177596.5
(22) Date of filing: 01.12.2009
(51) Int. Cl.: G06Q 40/00, G06Q 30/00, G06Q 20/00, G07F 7/10

(54) **Method and means for controlling payment setup**

(71) Applicant: Väänänen, Mikko Kalervo, 00131 Helsinki (FI)
(72) Inventor: Väänänen, Mikko Kalervo, 00131 Helsinki (FI)

(57) **Abstract**

The invention relates to an electronic system with which consumers and businesses can automatically and electronically facilitate competition for financial transaction services that they purchase, and/or participate in bigger markets more transparently than they can currently. The invention features a payment card, which is arranged to clear transactions with at least two accounts, which at least two accounts are arranged to be hosted by different financial service providers. The invention also features a payment card reader, which is arranged to clear transactions with at least two accounts, which at least two accounts are arranged to be hosted by different financial service providers. The transaction computer server of the invention is arranged to capture a competitive record of available bids that could have been accepted to complete the said transaction from at least one said electronic market.

## Description

### TECHNICAL FIELD OF INVENTION

The invention relates to methods and devices for enhancing competition in the clearing of financial transactions for small parties. In particular, the invention relates to an electronic system with which consumers and businesses can automatically and electronically facilitate competition for financial transaction services that they purchase, and/or participate in bigger markets more transparently than they can currently.

### BACKGROUND

300 years after the birth of democracy in Western Europe, it is no longer the people and their democratically elected representatives that run independent nations and the economy. The banks run the economy. The average person in the western world is tied to his or her bank by such a multitude of ways, that the average person does not even understand half the mechanisms with which banks extract financial benefit from their customers. The transparency of the international financial markets to the average citizen or business is simply so poor, that it is impossible to know how much money have the financial services providers charged two parties when a transaction is cleared between them.

For example, assume that the average consumer, say for example from Finland visits London and buys a sandwhich with his credit card. The purchased sandwhich is charged in pounds, with a price of 4 pounds sterling for example. The consumer will receive the bill to his home when he returns to Finland. The consumer needs to pay a yearly subscription of typically 50 euros to the bank or the credit card company. On top of this fee, typically a 1,95% increase is added into the currency exchange rate charged from the consumer. The cafe that accepted the credit card will have to pay a yearly subscription for the card reader, and typically a 1-5% commission on all the transactions, depending on its creditworthiness and other factors. The aforementioned fees are collected by the banks, and typically not by the credit service company such as VISA, MASTERCARD or the like. The credit card company collects a multitude of fees from its member banks such as:
- Card service fees: Determined by the number of credit cards issued and the extent to which they are used.
- Data processing fees: Determined by each member's connections to the VisaNet or other processing systems and the extent to which these systems are used.
- Multi-currency fees: Determined by the extent to which European credit cards are used outside the Europe region.
- Interchange fees: Interchange is the fee paid between the issuing and acquiring banks every time a credit card is used. It has been designed to balance the cost of issuing and accepting credit cards.

Quite clearly there is a huge number of expense structures that are not available to the scrutiny of an individual or a business that uses the credit card to buy a product. Indeed, it could be said that it is impossible for a consumer to choose a service provider that is reliable (i.e. will not go bankcrupt with your money and without clearing your deals) and cost efficient (i.e. does not charge too much for a simple service).

In the prior art, there are a number of technologies that increase consumer choice at the point of transaction, for example "Selectable multi-purpose card" US 7357331 JPMorgan Chase Bank N.A., George Blossom, provides technologies on a single card with which a consumer can access a credit or a debit account, and see the balance. This prior art is cited as reference. The prior art technical solutions have significant drawbacks, however. When different accounts are from the same provider there is no competition.

US 4700055 presents multiple credit card accounts in a single credit card to save wallet space. This document is also cited as reference. However, prior art suffers from a disadvantage. It is completely beside the point that the consumer *could choose* an account, if there is no way of him knowing what account should he choose to minimise unnecessary transaction costs.

### SUMMARY

The invention under study is directed towards a system and a method for effectively bringing competitive market intelligence to individuals and businesses so that they can buy products more cheaply by making the financial transaction providers compete for their business.

A further object of the invention is to present a technical system and a method that allows a completely transparent, known transaction cost albeit unknown end cost, transaction to individuals and businesses in the currency markets, or in any other market.

One aspect of the invention involves a payment card that is arranged to control transaction setup from the credit card so that the transaction cost is minimised for the buyer, the buyer and the seller, the seller, or the card issuing bank or the bank of the merchant or both. The payment card in accordance with the invention is typically a credit card that is connected to two different accounts in two different banks in some embodiments. The credit card is typically a smart card, i.e. it has an IC chip on the card with a microprocessor, ROM/RAM/EEPROM memory and the like. In some embodiments the credit card also has a radio connection such as a RFID, or a cellular radio connection, plain radio connection or the like. In some embodiments the credit card may also feature a GPS (Global Positioning System) circuit or a like locating device. In some embodiments the credit card comprises a display.

Payment card and credit card are used interchangeably in this application, and both cards are assumed to be applicable for direct payment, credit, and/or both.

It is in accordance with the invention to assist the user in many ways to reduce the transactional cost that in itself does nothing to buy the product. In some embodiments the transaction cost plans provided by the banks are programmed into the memory of the credit card. Whichever bank has the cheapest transaction costs, gets to clear the transaction. As the transaction cost models of banks might change, it is in accordance with the invention that the transactional cost data on the credit card is sometimes updated from a network server via a radio path, or with a memory card reader, or other wireline system.

In one aspect of the invention in calculating which bank to choose the payment card may make use of the GPS or RFID data to deduce location, or it may capture that data from a card reader in the merchant terminal. Based on the location, or data from the merchant terminal, the credit card software may deduce the currency being used. By knowing the transaction costs associated with the banks, the currency exchange rates on offer in each transaction, and any other relevant data that might influence the short-term or long-term cost efficiency of the transaction, the control means on the credit card sets up the transaction with an account that offers the smallest transaction costs.

In another embodiment of the invention, there is simply a screen on the credit card that shows the exchange rate of the currency being used to the base currency of the user. In this embodiment there may only be one account on the credit card, and the screen is used for informative purposes. In some embodiments the exchange rate is updated via the radio path as market conditions change. In some embodiments the screen shows the different exchange rates offered by the different banks, or the transaction costs offered by the different banks with which the credit card can execute a transaction. In some of these embodiments it is up to the consumer to then choose the bank he wants to execute the transaction with, based on more complete market information. In some embodiments the screen simply shows the best exchange rate, or the Interbank rate. In other embodiments it shows both the bank exchange rate and the Interbank rate, so the user can grasp how expensive the transactions truly are. In some embodiments both the exchange rate and the cost of the transaction for a particular financial service provider are shown on the display.

In many embodiments of the invention the combined cost of card service fees, data processing fees, multi-currency fees, interchange fees, subscription fees and/or currency spreads is minimised for the buyer, seller, or both, or the issuing bank, the bank of the merchant or both, or any combination of the aforementioned parties.

It is also in accordance with the invention that the merchant terminal may have multiple banks associated with it. In some embodiments the merchant terminal is arranged to choose which bank by the merchant is used to clear the transaction. In some embodiments the merchant terminal and the credit card exchange information when the card is read, and optimise the buyer bank - merchant bank pair, so that it bears the lowest aggregate transactional cost. Data with regard to the different cost models can be stored in the merchant terminal in accordance with the invention, and these may be updated to the merchant terminal by a wireline, wireless, radio, or card reader connection.

In another embodiment of the invention there is a transaction computer server. In one embodiment of the invention this transaction computer server has access to the currency Interbank market. There is a further computing system storing electronic customer accounts, and the customers can access these accounts through the Internet or with a credit card in some embodiments. The transaction computer server and the accounts server are connected or they may even reside on the same server or server system. In addition, in some embodiments the transaction server system and/or the customer account system has accounts in different retail banks that the customers use. This way money may be routed to the customer account system from retail bank accounts via an intra-retail bank transfer, which in most EU jurisdictions is instantaneous. The money can now be transferred to an account in the same currency without bank charges, as intra-retail-bank charges should be free or controlled by the regulator.

When the customer decides to pay a fee to abroad, for example from the EU to the US, he will send money to the account in the same retail bank that the transaction server and/or the customer account system have access to. These funds can then immediately be accessed through the customer account system by the customer. The customer then accesses the customer account system and issues a bank transfer to the US account. During the process, or during the establishing of the account a 'free market waiver' is shown to the customer which authorises the party running the transaction server to perform the currency trade between EUR/USD, which is necessary to finalise the transaction. When in possession of the said free market waiver, the transaction server will automatically execute the trade in the currency market, preferably the Interbank market. In doing so, the transaction server will capture not only the exchange rate of the trade, but also the competitive landscape of the EUR/USD market at that time. In some embodiments this competitive landscape, i.e. the bidding record on the market is stored and attached to the transaction receipt of the customer. Then in some embodiments a flat commission charge is subtracted from the customer. Now, the customer can view the transaction completely transparently as the commission charge is shown in EUR or USD terms in the account statement. In addition and most importantly the customer now has no fear of arbitrage from the transactor. The customer can inspect the competitive record of different bids to verify that his transaction was indeed conducted at a rate that A) did exist on the market between two independent participants in competition B) Was reasonably placed in terms of the deal obtained within the market.

Let us take a practical example that has happened in real life, situations like this occur in the EU every minute: A small business changes 200,000 euros to dollars. The bank statement will read: "exchange rate 1.2325, no commission or charges, end sum 246500 USD." Did the bank do the trade really for free? If a local EU financial regulator is asked, the answer is yes.

A closer inspection will reveal that on that day when the trade occurred the Interbank market rate varied between 1.2350-1.2600. The exchange rate provided to the SME did not exist in the Interbank market. The bank claims that the transaction was conducted as a free market transaction from another bank, and no charges were levied. How can this be explained? The other bank that cleared the transaction as a counterparty turns out to be a subsidiary or a sister company of the earlier bank that did the deal for the customer. How much did the consolidated bank group charge?: first there is the 0.0025 difference between the reported exchange rate and the *worse possible deal* that the bank group could have made during the day when it needs to clear the transaction. The consolidated bank group charges 0.0025*200000= 500 eur in the worst case. On top of that there is a variable 1.26-1.235=0.025 spread that the bank group can use to make more money during that day. For a normal average transaction where the bank group does not make a good or a bad guess but just places the trade on the market at random, the bank would finish on average in the middle of the spread range. In this event the bank makes 0.0125*200,000+500 eur = 3000 eur in profit from the currency trade. If the trader beats the market, and trades at the best position, the bank group will make 5500 eur in fees, from a transaction that takes less than 5 seconds to do. It should be noted that the transaction has practically no risk, because the bank group will ultimately be of course exposed to both the currencies all the time.

The above explains why the average trader in a bank makes between 7-10 million euros for the bank every year irrespective of whether they perform well or whether they perform badly. A multimillion euro bonus every year is only a small fraction of the money these employees make, and because problems in the lending business are ultimately the taxpayers problem, there is little market pressure to use the trading income to subsidise other products such as consumer or business credit that pulls in the transaction business.

The SME that was charged 3000 eur for 5 seconds of work cannot legally claw back the charges because the regulator is investigating one legal person, i.e. one company at the time. The bank that made the deal with the SME got no charges, and the regulator concludes that the service was for free. The bank group gets the 3000 euros through the consolidated balance sheet. The SME was not the customer of the group, only its subsidiary, so the SME cannot sue the Group to claw back the fees for bank services that were charged at 2 million euros/hour.

The technical problem that faces the prior art is that of the 'waterbed' effect. I.e. the banks tie customers to themselves with different products such as the Internet bank terminal, loans etc, and necessitate the use of some services, such as currency exchange, that can be used to charge customers and businesses outrageous fees. It is technically impossible for the consumer or the business to access fair competitive markets from the bank terminal.

The invention solves this by bypassing the transactional infrastructure of the bank with an inventive transactional computer server system that can conduct transparent and verifiable currency transactions in the international wholesale money markets, interbank markets or other markets where independent financial players genuinely compete with each other. Consumers and businesses can now participate in the big markets, such as the Interbank market, through the inventive transactional bypass system whilst still remaining the customers of their respective banks for credit, deposit, mortgage and other products.

A payment card in accordance with the invention, is arranged to clear transactions with at least two accounts, is characterised in that data stored into the memory of the payment card and or payment card reader is arranged to be used in determining an order of preference for the said accounts.

A payment card reader in accordance with the invention, is arranged to clear transactions with at least two accounts is characterised in that data stored into the memory of the payment card and or payment card reader is arranged to be used in determining an order of preference for the said accounts.

A transaction computer server in accordance with the invention, comprising at least one memory storing at least one customer account and at least one communication connection with which at least one customer can access at least one account, and at least one communication connection to at least one electronic market where trading is arranged to take place is characterised in that,
- at least one user is arranged to waive his or her requirements and accept a fair market price and/or rate,
- the transaction server is arranged to capture a competitive record of available bids that could have been accepted to complete the said transaction from at least one said electronic market,
- competitive record of available bids together with the conducted transaction is arranged to verify the transactional cost of executing the transaction.

A payment card arranged to access at least one transaction computer server of above.

A payment card reader arranged to access at least one transaction computer server of above.

A payment card comprising memory is in accordance with the invention and characterised in that,
- the payment card is arranged to receive a data update from a network server,
- the payment card is arranged to store said data into memory,
- the said data update is arranged to be used in controlling financial transaction setup between the user of the card and merchants accepting the card.

A payment card reader comprising memory is in accordance with the invention and characterised in that,
- the payment card reader is arranged to receive a data update from a network server,
- the payment card reader is arranged to store said data into memory,
- the said data update is arranged to be used in controlling financial transaction setup between a user of a payment card and the merchant accepting the card.

A payment card, comprising a memory chip is characterised in that, the memory chip is arranged to be inserted into a card reader in a mobile phone.

At this point in time the best mode of the invention is considered to be a multi-bank multi-account credit card that automatically chooses the most cost efficient transaction to clear the purchase. This is preferably used with a multi-bank multi account merchant terminal.

### BRIEF DESCRIPTION OF THE DRAWINGS

In the following the invention will be described in greater detail with reference to exemplary embodiments in accordance with the accompanying drawings, in which
Figure 1 demonstrates an embodiment 10 of the inventive credit card that can use at least two financial services providers to clear the transaction in accordance with the invention.
Figure 2 demonstrates an embodiment 20 of the inventive credit card - card reader combination in accordance with the invention.
Figure 3 demonstrates an embodiment 30 of the method of use of the inventive credit card and/or card reader at the point of sale as a flow diagram in accordance with the invention.
Figure 4 demonstrates an embodiment 40 of the inventive method for clearing a transaction as a flow diagram in accordance with the invention.
Figure 5 demonstrates an embodiment 50 of the inventive software user interface as a block diagram in accordance with the invention.
Figure 6 demonstrates an embodiment 60 of the inventive computer server arrangement as a block diagram in accordance with the invention.
Figure 7 demonstrates an embodiment 70 of the inventive computer server arrangement featuring at least one payment card and card reader as a block diagram in accordance with the invention.
Figure 8 demonstrates an embodiment of the inventive arrangement with which the issuing bank can control costs related to reciprocal transaction traffic.

Some of the embodiments are described in the dependent claims.

### DETAILED DESCRIPTION OF EMBODIMENTS

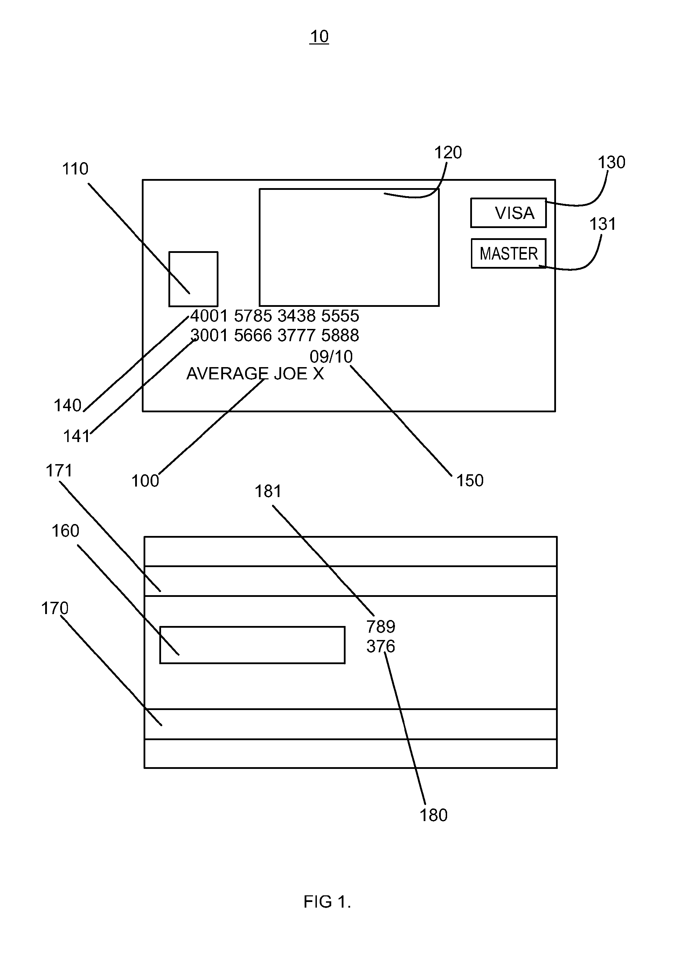

Figure 1 shows the embodiment 10 of a payment card that can clear transactions through different financial service providers. In some embodiments it is only a payment card, in other embodiments it is a credit card, in some embodiments it is both. In some embodiments the payment card has two card numbers 140, 141. It typically has only one proprietor 100. Typically there is also only one expiry date, but there may be several proprietors and/or expiry dates on the card for different account configurations in some embodiments. In some embodiments the card may have several different emblems 130, 131 that typically relate to the IT networks through which the payment card can clear transactions. In some embodiments there is also a chip 110 on the payment card that may feature memory, and/or a small microprocessor. In some preferred embodiments of the invention, there are no double emblems, numbers or the like, the different financial service provider features are stored on the chip, and the card has just one number expiry date, name and so forth as a usual credit card does.

On the other side of the payment card the card may have two different security codes 180, 181 or more, a signature sheet 160, and two magnetic stripes 170, 171 or more. In some embodiments the payment card only has one magnetic stripe which contains the data for the default account that can be used with legacy magnetic payment systems. It is also possible that there is only one security code 180, 181. In a special embodiment the payment card 10 is just like any current payment card today but the chip 110 contains access data that can be used to access more than one financial service provider and/or account.

In a particular embodiment, the issuer of the card puts different access data on the chip 110. For example the issuer can put VISA access codes and MASTERCARD access codes, and AMERICAN EXPRESS access codes in one embodiment. In one embodiment it is possible that the issuer would choose the same card number, expiry, security code for all of these payment systems. The payment card will then be accepted by any of the aforementioned payment schemes.

Quite clearly the payment card may be a credit card, debit card, direct debit card, prepaid purchase card, or in fact any payment card in accordance with the invention.

In some embodiments the chip contains a list of priority that is used to rank the different payment systems. One exemplary list in accordance with the invention could be for example:
1) VISA
2) MASTERCARD
3) AMERICAN EXPRESS

In the priority list embodiment the payment card tries to clear the transaction first with the most preferred payment service, if this fails, then with the second most preferred payment service, and so on in the order of priority. If 1) signifies high priority, VISA would be chosen first in the above example.

In some embodiments the payment service data is stored in the memory of the smart card chip, such as EEPROM, ROM, RAM or other like memory. The microprocessor on the smart card chip 110 is used in some embodiments to read the data from the memory and choose a payment service through which the transaction is set up.

In some embodiments there is a inventive computer server connected to a communication network. This computer server can be used to update data in the memory of at least one payment card. The update connection may be a wireline connection, such as a cable connection, and the smart card memory is updated whenever the payment card is inserted into a card reader that is capable of delivering the update. In some embodiments the payment card memory is updated via a radio path. For example the memory chip part 110 of the payment card or the entire payment card can be inserted into a mobile phone in some embodiments. The mobile phone is used to receive a radio data update from a remote computer server, for example via Over-The-Air protocol or other data transfer protocol based on the GSM-, CDMA, Iridium, InMarsat, WCDMA, UMTS, or any other wireless data transfer protocol. It is also possible that data is updated on the smart card via an Internet-, Ethernet-, Bluetooth-, Infrared-, IrDA-, USB-, and/or wireline or wireless optical connection in some embodiments. The payment card may contain a radio transceiver or any other wireless communication link to obtain data wirelessly. In some rare embodiments the payment card may have a physical data connection socket for wireline data updates as well.

In some embodiments a microprocessor on the payment card chip can control transaction setup from the payment card. In some embodiments the transaction is arranged with the lowest transaction cost to the buyer, seller, and/or lowest aggregate transaction cost for both. In some embodiments the transaction is set up so that it has the smallest transaction cost to the issuer of the card.

In one particular embodiment a bank issues the aforementioned payment cards to its customers. The customers typically have accounts in the bank that issued the at least one payment card. The issuing bank needs to pay all sorts of fees to the payment service companies (VISA, MASTERCARD, AMEX, etc.) for the use of the data network that clears the transactions. In one embodiment the payment card is arranged to setup the transaction so that the transaction cost is the smallest to the issuing bank. This way the issuing bank can make the maximum profit and improve its competitive position against the international credit card/payment card companies. Whoever provides the cheapest data network to the issuing bank gets to clear the deals the customers of that bank make with their payment cards. The issuing bank can furthermore pit the payment service companies against each other: If the issuing bank feels for example VISANET charges too high fees, it can update MASTERCARD as the preferred payment service provider on the payment cards of its customers, by beginning to issue cards where MASTERCARD is preferred, or by updating MASTERCARD to a more preferred position in the existing issued payment cards, through a radio path update or via a data update pushed through a wireline network.

In some embodiments the payment card has a radio receiver embedded on it to receive data updates. In some embodiments the payment card is compatible with a mobile phone so it can receive e.g. a GSM SIM OTA update (similar to updating PLMN lists in GSM SIM cards for example) or any other radio update. In other embodiments a data update is pushed to card readers and whenever a payment card is inserted, the data update is written into the memory of the payment card, along with any other actions that were supposed to happen between the card reader and the payment card. The most preferred available payment service provider is taken as the first choice in preferable embodiments of the invention.

In some embodiments it is possible that the use of some financial providers is blocked from the payment card by blacklisting these financial institutions. Say, Bank A of Panama charges very high transaction fees. In one embodiment the issuing bank places Bank A on a "prevented banks"-list in the chip in the payment card, like is the case with blocked roaming operators in GSM PLMN lists. In some embodiments the data on the chip is updated based on location of the payment card, for example when in Panama, Bank A gets put to the list by wireline or radio update.

In one embodiment, the chip 110 can be extracted from the payment card 10 in shape and size similar to a SIM card in the GSM mobile telephony system. In some embodiments this chip can be inserted into a mobile phone. When in the mobile phone, it may interact with the user through the user interface of the mobile phone. In some embodiments the chip 110 can be updated via the radio path of the mobile phone, or any other communication path accessible to the mobile phone. In some embodiments users can check data from the chip 110 via the screen and user interface devices of the mobile phone. In some embodiments the user can modify data on the chip card with the keyboard and other devices of the mobile phone or attached to mobile phone. In some embodiments the phone SIM card and payment card have the same PIN number. In some embodiments the user can charge calls onto the payment/credit card chip 110 when it is detached from the payment card and inserted into a mobile phone as a SIM card. In some embodiments all phone calls are automatically billed on the same payment card, thus saving time in bill processing and postage.

In some embodiments the payment card has a corresponding SIM-card on a separate chip. In some embodiments the chip 110 that is arranged to be used as a Subscriber Identity Module, is inserted into a card reader that is connected with a computer or a mobile phone. In some embodiments on-line purchases, or any purchases can be made more automatically, by card reader software extracting the necessary data from payment card chip. This way there is no need for the user to manually enter his payment card details when purchasing something over the Internet, for example. In some embodiments the seller's website is only arranged to show the details that were read from the card reader and then ask for the PIN. If the PIN is correct, the transaction is cleared.

It should be noted that any features, phases or parts of the payment card 10 can be freely permuted and combined with embodiments 20, 30, 40, 50, 60, 70 and/or 80 in accordance with the invention.

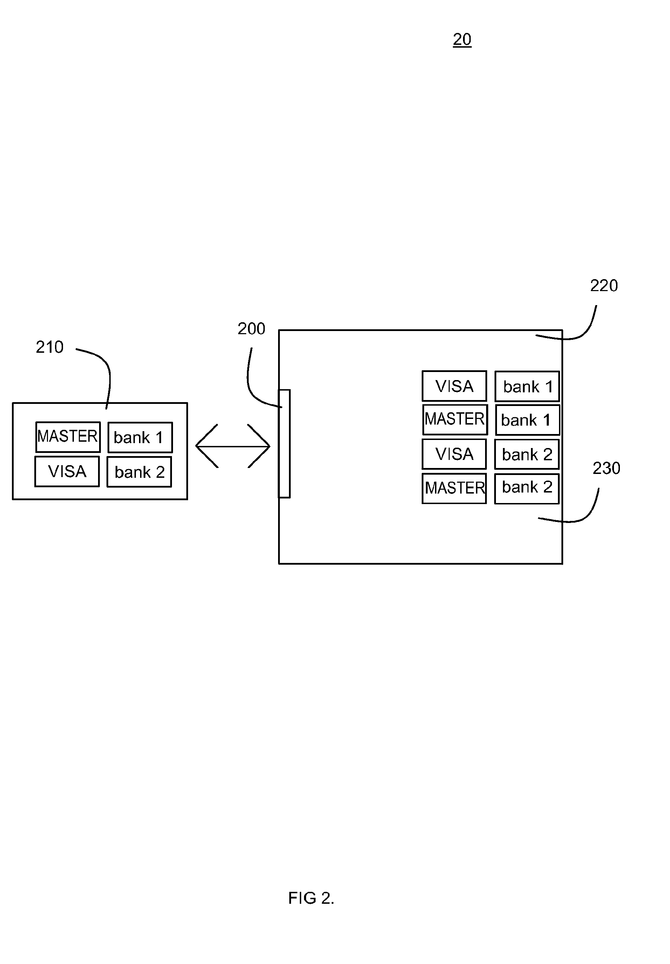

Figure 2 shows an embodiment 20 of the payment card-card reader system. The payment card 210 is arranged to be inserted into the slot 200 in the card reader 220.

The card reader is typically operated by person and/or a company that wants to accept purchases and payments. In some embodiments the card reader 220 is arranged to feature access to more than one payment network, such as VISA and MASTERCARD. In some further embodiments there are multiple bank accounts that can be accessed by the card reader also. In some embodiments there is a multitude of bank account+payment network combinations that can be accessed by the card reader as shown in the figure 2. (4 different combinations).

The payment card 210 may also have different payment network and bank account combinations. One payment card may have for example a VISA account in HSBC and a MASTERCARD account in Deutche Bank in some embodiments.

In some embodiments when the card is inserted in the slot 200 the payment card and the card reader 220 read data from each others memories. Also it is possible and in accordance with the invention that just one or the other reads data from the memory of the other, i.e. card reader reads card memory, and/or card reads reader memory. The card reader, the payment card or both can use their memory and/or microprocessor devices to determine the best way to conduct the transaction.

In one particular embodiment the transaction is arranged with the lowest transaction cost to the buyer, seller, and/or lowest aggregate transaction cost for both. In some embodiments the transaction is arranged with the lowest transaction cost to the issuer of the payment card and/or the issuer of the card reader. In some embodiments the transaction is arranged with the lowest transaction cost to the bank or institution issuing the payment card and/or the bank or institution issuing the card reader.

In one particular embodiment, the card reader 220 and/or the payment card determine whether it is possible to conduct an intra-bank transaction, i.e. from a VISA account in HSBC to another VISA account in HSBC for example. The card and the reader will then preferentially conduct an intra-bank transaction in accordance with the invention if possible.

In many embodiments of the invention it is possible to update data in the payment card, card reader or both via cable, radio path and/or optical and/or IR data connection wirelessly or via a wireline connection. In some embodiments the card reader is equipped with a radio transceiver.

It should be noted that any features, phases or parts of the payment card-card reader 20 can be freely permuted and combined with embodiments 10, 30, 40, 50, 60, 70 and/or 80 in accordance with the invention.

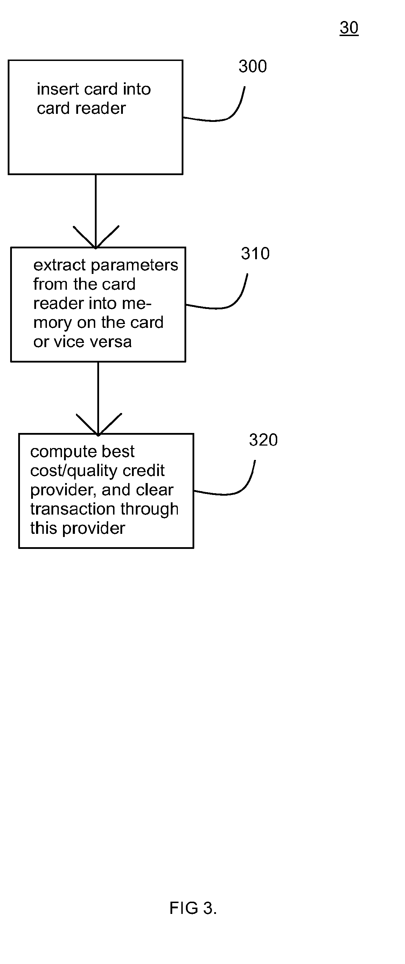

Figure 3 shows an embodiment of the use of the inventive payment, inventive card reader, or both. To make matters clear it is possible and in accordance with the invention that the inventive payment card is used with legacy card reader systems. It is also possible and in accordance with the invention that the inventive card reader is used with legacy payment cards. It is naturally possible that the inventive payment card and card reader are used together in some embodiments.

In phase 300 the card is inserted into the card reader. Typically the card is inserted so that the chip 110 on the card enters the card reader slot 200. In phase 310 parameters are extracted from the card reader to at least one memory on the card, typically the memory is in the chip 110.

In some embodiments these parameters are update parameters, which are used to update transactional data on the card, for example the list of preferred transaction service providers as mentioned earlier. Any data updates can be done on the card before, during and/or after the transaction while a data transfer connection still exists between the memory on the card and the card reader. However, in many embodiments there is no need to update transactional data on the card all the time, the need for transaction setup data updates is commensurate with the price changes in the transaction clearing market. If the financial service providers change their transaction prices often, then the cards need to be updated often, but if not, the frequency of needed updates is less.

In phase 310 data needed to conduct the transaction is exchanged. In one embodiment of the invention the card reader reads the card and determines which modes of payment are possible. In some embodiments the reader will then select the cheapest mode of payment to the merchant in possession of the reader and execute the transaction based on that data. It is also possible that the card reader chooses the transaction mode that has the lowest cost to the buyer, the lowest total cost to the buyer and the merchant, or the lowest cost to the bank or institution that issued the card reader and/or an account to which the card reader relates to, for example by clearing transactions to that account. In some embodiments the card reader reads a priority list from the chip 110 on the card and executes the trade with payment mode that has the highest priority and is accessible to the card reader. In some embodiments the card reader has a priority list of preferred institutions and/or accounts in its memory for clearing transactions. In some embodiments the card reader has a list for blocking institutions and/or accounts from clearing transactions. In some embodiments the card reader and/or payment card may look up any data, or preference list, from at least one remote server on the network.

In another embodiment in phase 310 the payment card may read the card reader and determine which modes of payment are possible. In some embodiments the microprocessor on the chip compares the payment mode options available in the card reader. If a payment mode is found on the card reader, and also on the priority list of the payment card in the chip, the payment mode with the highest priority on the list is selected. In another embodiment where the payment card sets up the transaction, the transaction is arranged with the lowest transaction cost to the buyer, seller, and/or lowest aggregate transaction cost for both. In some embodiments, the transaction is set up by the payment card so, that the transaction cost is the smallest to the bank that issued the payment card.

In some further elaborate embodiments the card reader and the payment card may exchange data to elaborate, and find a payment mode that both parties, the buyer and the seller, or their respective issuing institutions are willing accept. In some embodiments the position of the actual buyer is iterated against the position of the issuer of the card reader, and/or the position of the merchant is iterated against the issuer of the payment card. I.e. for example HSBC and a barber business will have the card and the card reader electronically elaborating a mode of payment that is acceptable to both parties.

In phase 320 at least one best and/or acceptable payment service provider is determined by either or both parties in some embodiments of the invention, and the transaction is cleared through at least one payment service provider of choice. The choice is typically based on cost, but quality and/or cost/quality ratios may also be considered in some embodiments. Naturally conditions such as the speed of the transaction clearing, or error rate may affect the choice made by the payment card, card reader or both.

It should be noted that any features, phases or parts of the method 30 can be freely permuted and combined with embodiments 10, 20, 40, 50, 60, 70 and/or 80 in accordance with the invention.

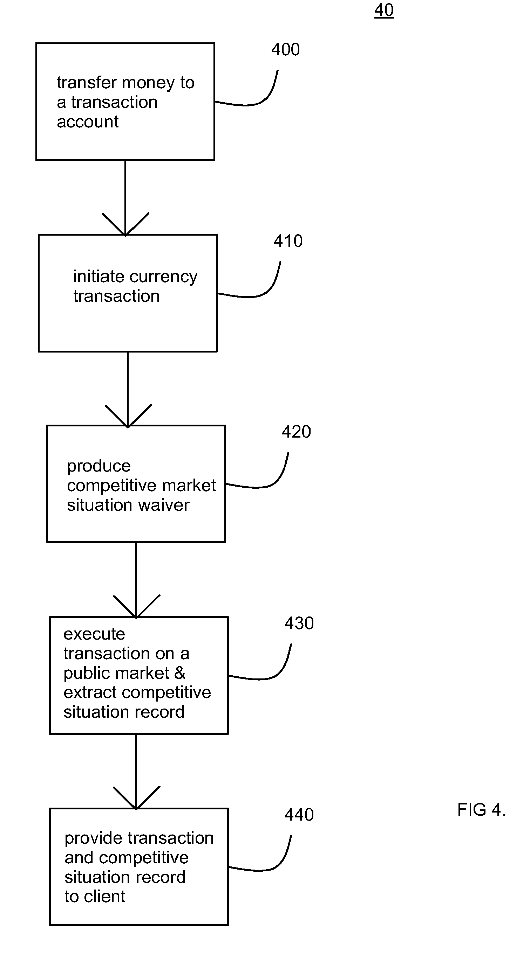

Figure 4 presents an embodiment of the same inventive concept of increased transparency and competition applied to Internet bank transfers. In phase 400 the user transfers funds to a transaction account if there are not enough funds already there. In phase 410 a transaction is initiated which may be for buying or selling bonds, shares, commodities or any other marketable assets, or the like in some embodiments.

However, the invention probably works the best and has the widest application in currency trades in some embodiments. In particular the invention works the best in situations where real companies actually trade in real goods (i.e. non-speculative transaction). Whenever a real good is transacted and the buyer and seller are in different currency regimes, a currency conversion needs to be done by the banks transacting the deal in order for the payment to be delivered. As explained earlier, the companies/people are not typically fooled by excess in fixed fees that the companies can inspect. Instead, the absurd fees are typically generated by arbitrage, i.e. baked into the perceived exchange rate the company/person gets, which is more difficult for companies to inspect. This is made possible by the subsidiary structure used by bank groups.

The technical means & step that solves the information asymmetry problem between the end user and party conducting the transaction takes place in 420. In phase 420 a competitive market situation waiver is produced. A computer on the network that is operated by the party conducting the transaction typically produces the said waiver to the user through the Internet interface when the user is logged onto his account, or through any other typically electronic means, such as file exchange from computer to computer. In some embodiments the competitive market waiver is a PDF document that needs to be approved by the user, or it appears in a separate window in a type of "I agree to conditions / I do not agree to conditions". The competitive market waiver can be collected from the user of the system by any technical means, such as a phone call, letter or the like in accordance with the invention. The competitive market waiver can be of different legal types, it may be a Power of attorney to the transacting party to transact on competitive markets on behalf of the user, or it may be a conditional agreement to allow a trade between the user and the transacting party, provided the competitive market situation of that trade in a competitive market is verified and justified later. The first case is very clear, the transacting party simply trades under the POA, and delivers the competitive record later. The latter case is also quite simple, the transacting party and the user do the trade at a price, and the transacting party justifies that price by the competitive bidding record from a competitive market. In practice, the transacting party will just do the trade with the user, and immediately float it on the open market, and provide the competitive bidding record from the open market to the user to justify and verify the trade they did. This is the type of pseudo-own-account trade. The transacting party trades on its own account, but is required to prove to the user that he has not cheated by taking arbitrage. In some embodiments of the invention, the computer server performs all these actions in a matter of seconds, and the trade and the competitive record will appear to the user account statement in a matter of seconds.

The primary need for the waiver is to be a matter of record. In some embodiments the user permanently signs the competitive market waiver for all transactions or for all transactions for a certain unit of time, or for a certain group of transactions.

The competitive market waiver retrieves the approval from the user that the transaction is conducted under special conditions: free market conditions. In the waiver the user gives up all his rights to any compensation or damages should the whole capital used in the transaction disappear. In other words the user takes all the risks, in exchange for the promise that the transacting party will float and execute the transaction on free markets. The fee is then charged for this service, in most embodiments. As the user takes the risks, he can expect lower cost. It is true that there is a possibility that a meteor may hit the United States or the EU leading to the complete abolition of the US dollar or the Euro. If the EU would be destroyed in the next 5 minutes, the EUR-USD exchange rate being currently 1.51, it might be a good idea to take the rate of 1.49 being offered by the bank terminal when sending 2000 USD from the US to a party in France. However, is approximately 40 USD (0.02*2000USD) really a reasonable fee for the insurance that a meteor does not destroy the EU in the next 5 minutes, or generally that the market does not turn for the worse? After all, it is quite probable that the EU is still there even after ten minutes and the euro is trading quite close to USD where it was, and banks both in the EU and US know this very well.

However, as the competitive market waiver has been obtained, there is no reason for the transacting party to offer *any* exchange rate at all (exception being the pseudo own account trade). The user has already accepted that whatever the rate, he will accept it, provided free market conditions prevailed. If a meteor indeed hits the EU, and everybody is buying dollars, he will still take them (the euros) at the market rate, no matter how much their value is expected to drop in the very near future. In preferred embodiments of the invention the requirement of the user is simply that the transacting party *proves that the deal was **fair** (i.e. did not include arbitrage),* even if this is to be done afterwards.

In phase 430 the computer system of the transacting party executes the transaction on the public market and extracts the competitive situation record. This record will *prove* that the deal was fair. The actual price only tells what the price was. Typically the record will show the competing bids that were available at the time the transaction was made. It may also provide other data, such as the parties making the bids, their sums, or any other relevant competition data, which preferably can be inspected in accordance with the invention.

Typically in many preferred embodiments of the invention the competitive transaction record is sent to the user via Internet, email, post, fax or any other feasible method in phase 440. The user may then scrutinise the performance of the trade and its cost to the prevailing relevant market conditions at the time of the trade.

The aforementioned technical system for transacting deals electronically is especially suited to markets which trade in arguable non-assets, such as currencies. Currency could be described arguably as not even an asset class, because it is a zero sum game. The invention provides a special advantage in this use embodiment, because minimising fees paid to middlemen & speculators is a primary concern for parties that simply want to enter and exit the market, rather than trading actively on it. As explained above, the transaction server does that with the minimum real cost and maximum end transparency. It should be noted however, that the systems of the invention are applicable for any electronic market, stocks, commodities, real estate, any futures, any options, bonds, insurances, swaps, credit default swaps, leveraged instruments, securitised loans or the like.

In a preferred embodiment applied to the currency markets the transaction server will routinely issue price requests for certain blocks of currency that the user have entered into the system with a competitive waiver in force. Preferably the transaction server will send these requests to institutions that are *market-makers,* i.e. institutions that have to provide a rate for that currency pair. Preferably, the transaction server *does not* specify which way the deal is done, i.e. whether buying or selling. Now suppose Deutche Bank and HSBC, both assumed market makers, come up with EUR-USD pairs of 1,495 and 1,490, respectively. There is a David Smith from Kansas, US sending 2000 USD to his son Charles in Ecole in France, and a Helmut Merkel sending 1500 euro to his daughter Nadine who is in college in Arizona, US. What will the transaction server of the invention do? The transaction server will put David Smith's order against the bid from HSBC and sell USD at 1,490 and get the maximum amount of euros for Charles. Helmut's 1500 order is placed against the bid from Deutche Bank, with an order to buy dollars. The end result is that Charles gets 2000(1/1.49-1/1.495)=4 euros more, and Nadine gets 0,005*1500=7,5 USD more. The trade for Charles will go into the competitive record provided for Helmut and Nadine and the trade for Nadine will go into the competitive record provided for David and Charles. Everybody has won in accordance with the invention, except the banks who missed the opportunity to do the deals the other way around and take the money from both Nadine and Charles in *arbitrate.*

It should be noted that the mere recording and production of the competitive record is hugely important, even if it were never used. The mere fact that the record is being produced provides a high disincentive to cheat to the transaction party. It should also be noted that competitive situation waiver is also hugely important. In some embodiments and some jurisdictions the transaction party cannot conduct the trade without it without trading entirely to its own account, which is precisely what the invention tries to avoid because it increases opaqueness in the financial system. With the current invention real people and real companies can connect to the large markets of the world at their own risk without paying premiums for insurances that the banks mandatorily couple with any purchase that gets made in their proprietary systems.

It should be noted that the competitive situation waiver does not and should not be all inclusive. It should be beside the point if Helmut's US based uncle would have come up with a bid of 1,55. The competitive situation waiver should pertain to a known market that is competitive and that the server can access in most embodiments of the invention.

It should be noted that any features, phases or parts of the method 40 can be freely permuted and combined with embodiments 10, 20, 30, 50, 60, 70 and/or 80 in accordance with the invention.

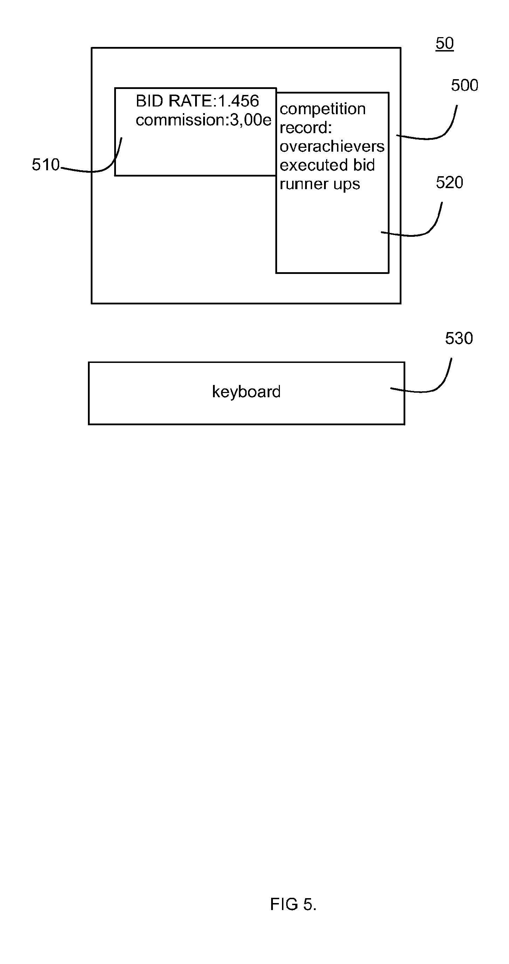

Figure 5 shows an embodiment of the user interface 50 for operating the invention from the customer end. In this embodiment the user is viewing his transaction/payment account, or credit card account statement or any statement that records his deals. In this embodiment he views the user interface from a computer screen 500, and operates the system with a keyboard 530, and possibly a mouse or any other control means (not shown).

The screen now shows the user viewing his euro payment to the USA, which of course gets converted to dollars so a currency trade needs to take place. The account statement 510 will show at what rate the deal was done, and the commission, which may be a flat rate that is typically better understood by consumers. However in some embodiments it may be a percentage or a combination of a flat fee + percentage. This is not the point, the main point is that the price of the work that the transaction party did is disentangled from the actual exchange rate. Now in addition to the actual deal 510, a further window 520 opens that displays the competitive record that was obtained when the transaction was made. In most situations in a free market, everybody cannot get the best deal. That is why the competitive record will typically show deals that were on the market and were executed on the market with more favourable terms, i.e. the "overachievers". These are just transactions that were better placed in terms of size, conditions or any other factor that the main market transacted to between those two parties instead of involving the user as one of the parties. The fact that others got a better deal is likely to upset the user viewing the record, but such is life. Occasionally, and indeed most of the time for most people, you need to be happy with the second or third best, or indeed 500^{th} best, because that is what other people offer on the market and if you do not take it, you'll be worse off further still. For most parties who understand this reality of the markets it is not a problem. As long as the executed bid is somewhere in between good and bad, i.e. there are worse bids that might have been taken, the executed bid is likely to be a fair outcome of competitive struggle in a market that genuinely pits strong independent players against each other. In a market like this everybody gets a *de facto* fair price, and it is impossible to cheat.

The user also has the benefit over time of having these records in some embodiments of the invention: he can compare his position in the competitive record, which should be a random walk over time. In some embodiments there is a random walk program that fits a statistical model of the position of the executed bids in their competitive landscape. The user's suspicion should arise if he is systematically at either ends of the competitive record, always a poor performer or always a great performer. If this is the case, it is quite probable that someone is cooking up the deals at the transacting party, and possibly falsifying records. For many practical purposes, the competitive landscape history is a better objective test of whether the end user has been fairly treated by the transacting party, rather than a financial regulator opinion, which of course, is only an opinion.

Quite clearly, the user interface can be used with any electronic device such as a computer, laptop/palm computer, mobile phone and/or a TV in accordance with the invention.

In some embodiments the invention works well in *liquid* markets. When markets are liquid, like the currency markets, automatic flotations are easy and reflect the truth in the marketplace. This can be a different story if the market is very *illiquid.* If everyone wants simply a fair market price, without saying what it is, the market will stop, because there is no number, i.e. price to trade at. In some embodiments the transacting system may simply guess numbers and put them onto the marketplace just to get the trading to begin. In some embodiments the guess can be based on past market performance or expected future market performance. I.e. when there is a systemic open offer trap, i.e. everybody is open to offers but no one is making any offers, the trading can be resumed by a guess at the reasonable market price in some embodiments. The guess can be computer or human generated in some embodiments of the invention.

It should be noted that any features, phases or parts of the computer system 50 can be freely permuted and combined with embodiments 10, 20, 30, 40, 60, 70 and/or 80 in accordance with the invention.

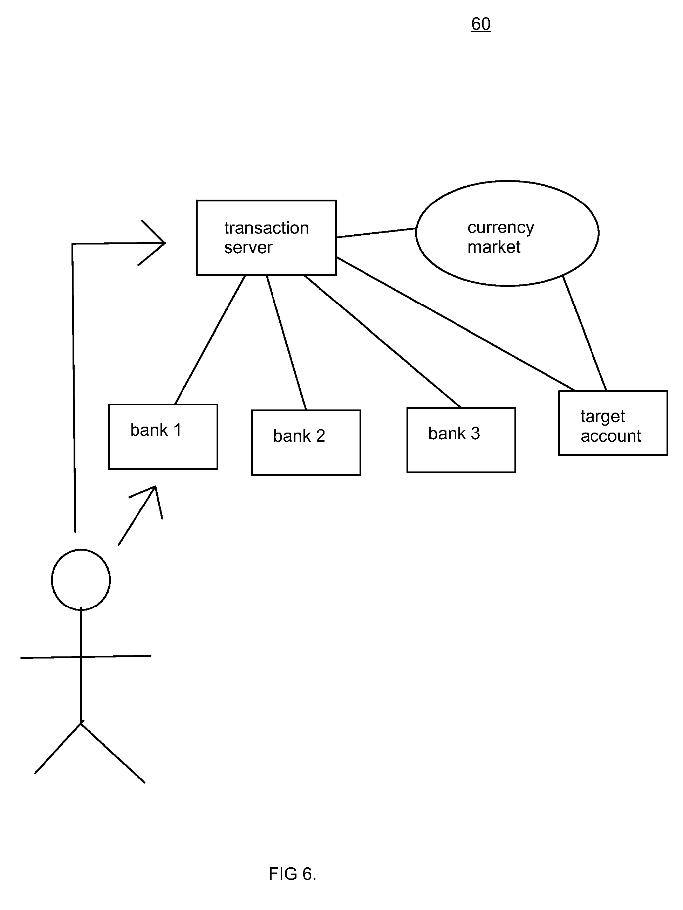

Figure 6 shows the computer network as a block diagram used to carry out transactions with the method 40. The transaction server typically has accounts in many major banks, typically also in the same baseline currency. For example for Finnish customers the accounts would be euro accounts in Finnish banks, irrespective of where the transaction server resides. When the companies or people transfer money to the transaction account from their accounts with banks 1, 2, 3 the money will typically show immediately at the customer's transaction account at the transaction server.

A user can simultaneously be logged onto his own bank account at say bank 1 and the transaction account associated with the transaction server. Thereby the user can bypass the transaction machine of the bank and access the larger market. Ideally, in the case of a payment involving more than one currency this would be the gigantic Interbank market. In order to be able to participate into the Interbank market the transaction server needs to be operated by a party entitled to access the said market. It is in accordance with the invention to enter the market through any reasonable technical and/or legal communication channel. In a particular embodiment in some jurisdictions the access to the Interbank market is restricted by size, so it might be difficult for the operator starting the transaction server to begin operating. In some embodiments the transaction server is automatically arranged to generate transaction and competition waiver data for statistical purposes, and even in some embodiments for the purposes of generating data and/or evidence for a court order and/or regulatory authorisation to enter and keep connecting to the Interbank market. This automated record collecting technical feature is useful in scenarios where existing powerplayers in the business try to inhibit competition unlawfully by trying to shut the transaction server out of deals that would offer preferential benefits and/or advantages when executed.

The transaction gets delivered to the target account directly by the transaction server if it has access to that account, or through an intermediary and/or recipient bank. Preferably the transaction server minimises the cost charged by the available intermediary and/or recipient bank in some embodiment.

It should be noted that any features, phases or parts of the computer system 60 can be freely permuted and combined with embodiments 10, 20, 30, 40, 50, 70 and/or 80 in accordance with the invention.

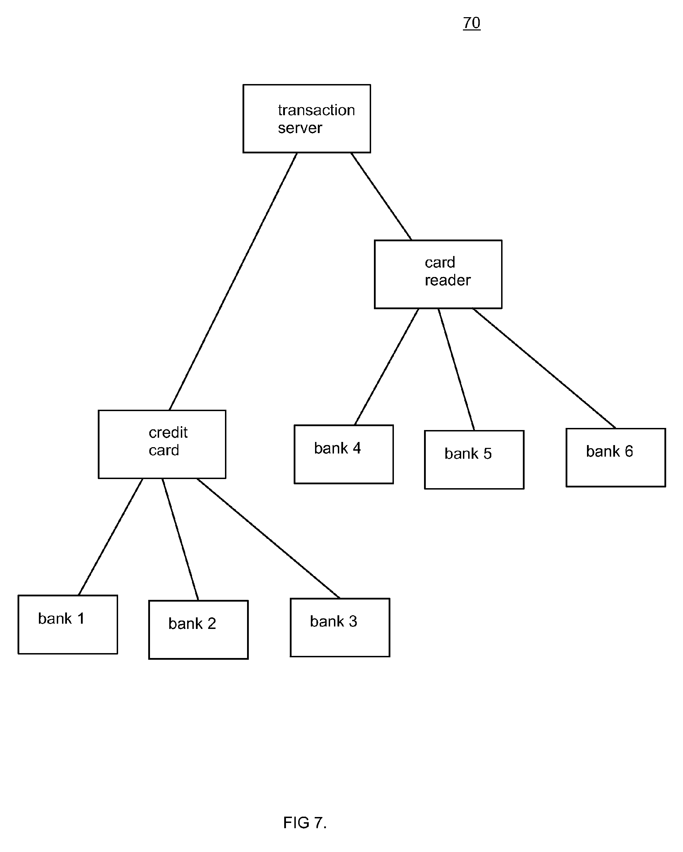

Figure 7 shows the system of mobile payment devices with the transaction server. The transaction accounts of the transaction server may be associated with a payment card in some embodiments.

In these preferred embodiments the payments that were paid with the payment card and/or accepted with the card reader are transacted with the method 40 in some preferential embodiments.

In other embodiments transaction server may be arranged to control transaction setup from the payment card or card reader based on control data that it may provide to the payment card and/or card reader, through updates or no updates in some embodiments of the invention. Typically in some embodiments the transaction server observes the market bids the different financial service providers provide in the open market. The transaction server may follow charges that are borne by customers and/or businesses in some embodiments. Based on the provided market prices and charges the transaction server can decipher which financial service providers offer the best end terms to end users for their respective deals.

In some embodiments the transaction server resides with a bank. In that particular embodiment the transaction server may be arranged to minimise the costs being paid to other banks for money traffic, by intelligently controlling the transaction setup from the payment card and/or the payment card reader in some embodiments.

It should be noted that any features, phases or parts of the computer system 70 can be freely permuted and combined with embodiments 10, 20, 30, 40, 50, 60 and/or 80 in accordance with the invention.

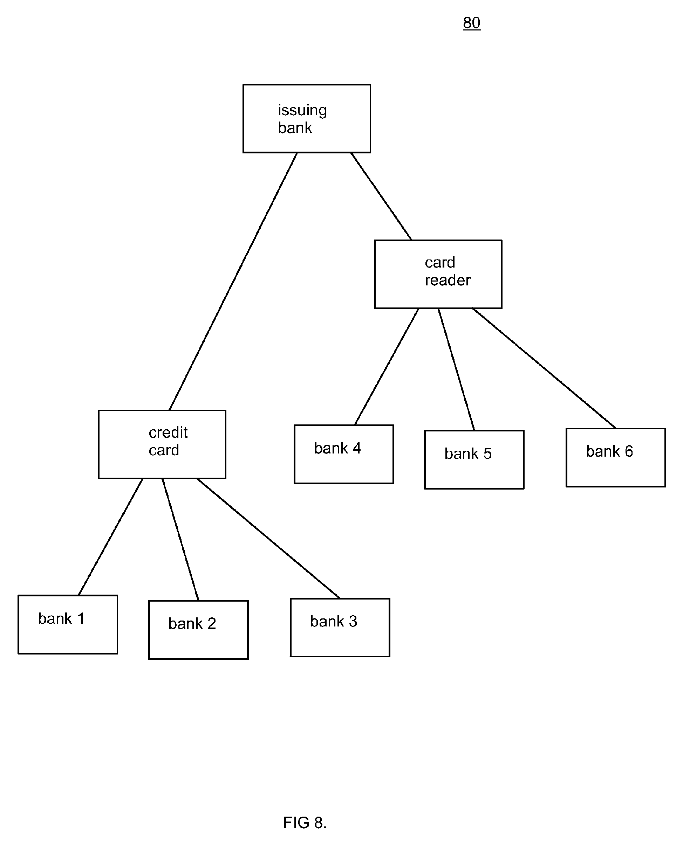

Fig 8 shows an embodiment where an issuing bank uses the invention to cut production cost of financial services. The issuing bank will update any data pertaining to transactional traffic, such as price data, service quality data or the like to the card readers and/or payment cards it issues in some embodiments. In some embodiments the issuing bank maintains preference lists in both the card readers and the cards. The preference lists preferably feature those other banks, credit card companies, and/or payment network companies that provide preferential and/or cheap rates to the issuing bank. In some embodiments the issuing bank puts itself as the first choice in order to execute as many transactions as intra-bank transactions as possible.

In most embodiments the companies that charge the issuing bank the least are featured on the preference lists and/or in the data, and these are used more often than other companies in order to control the transactional costs that other companies besides the issuing bank get. In some embodiments, for example in the case of the issuing bank having subsidiaries, the preference list and/or data may feature subsidiary companies. For example if banks 1, 2, 3 are subsidiaries of the issuing bank, the payment card may be updated to prefer banks 1, 2, 3, over any other bank in some embodiments. Also if bank 4 provides the cheapest transaction traffic costs to the issuing bank, it may be selected as the first choice when available. In some embodiments the banks 1, 2, 3, 4, 5, 6 may be replaced by payment network and/or credit card companies such as VISA, MASTERCARD, AMEX or the like in accordance with the invention. Also in these embodiments the issuing bank typically puts the cheapest credit card company and/or payment network as the first choice.

The invention has been explained above with reference to the aforementioned embodiments and several commercial and industrial advantages have been demonstrated. The methods and arrangements of the invention increase competition and transparency in any financial market where the invention is used, and particularly in consumer credit markets. Even more importantly the technical computerised means of coordinating a free market-full risk-low cost position for people and business provides security and comparability to people and businesses that trade in real goods, because the bypass system of the invention prevents the banks from attaching speculatively high insurance premiums to deals that are extremely low risk in practical life. The invention thus significantly reduces the cost of international trade because it liberates the companies to participate in the big free global financial markets instead of being forced to deal with a bank that speculates with the deal of the person or company for the bank's own benefit. For issuing banks the inventive system may be used to reduce the costs these banks need to pay for reciprocal transaction traffic, by making the other banks and/or transaction networks compete for the transaction traffic with more preferential terms.

The invention has been explained above with reference to the aforementioned embodiments. However, it is clear that the invention is not only restricted to these embodiments, but comprises all possible embodiments within the spirit and scope of the inventive thought and the following patent claims.

### REFERENCES

US 7357331 B2, Blossom et al., Selectable multi-purpose card, JPMorganChase Bank N.A.
US 4700055 Kashkashkian Jr., Multiple Credit card System.

## Claims

1. A payment card, arranged to clear transactions with at least two accounts, **characterised in that,**
data stored into the memory of the payment card, payment card reader, and/or a network server is arranged to be used in determining an order of preference for the said accounts.

2. A payment card reader, arranged to clear transactions with at least two accounts, **characterised in that,** data stored into the memory of the payment card, payment card reader and/or a network server is arranged to be used in determining an order of preference for the said accounts.

3. A payment card and/or payment card reader as claimed in claim 1 and/or 2, **characterised in that,** the payment card and/or payment card reader is arranged to comprise at least one memory device and/or at least one microprocessor device.

4. A payment card and/or payment card reader as claimed in claim 1 and/or 2, **characterised in that,** transactions are arranged to be cleared to the accounts according to the order of preference.

5. A payment card and/or payment card reader as claimed in claim 1 and/or 2, **characterised in that,** at least one network server computer is arranged to realise a communication connection to at least one payment card and/or payment card reader.

6. A payment card and/or payment card reader as claimed in claim 1 and/or 2, **characterised in that,** the transaction is arranged with the lowest transaction cost to the buyer, seller, card issuer, card reader issuer and/or lowest aggregate transaction cost for any combination of the aforementioned parties.

7. A transaction computer server, comprises at least one memory storing at least one customer account and at least one communication connection with which at least one customer can access at least one account, and at least one communication connection to at least one electronic market where trading is arranged to take place, **characterised in that,**
- at least one user is arranged to waive his or her requirements and accept a fair market price and/or rate,
- the transaction server is arranged to capture a competitive record of available bids that could have been accepted to complete the said transaction from at least one said electronic market,
- competitive record of available bids together with the conducted transaction is arranged to verify the transactional cost of executing the transaction.

8. Transaction computer server as claimed in claim 7, **characterised in that,** the transaction server is arranged to conduct and/or start the transaction.

9. Transaction computer server as claimed in claim 7, **characterised in that,** the transaction server is arranged to automatically choose a transaction with the lowest aggregate transaction cost for the user.

10. Transaction computer server as claimed in claim 7, **characterised in that,** the transaction and the competitive record of the bids are stored in the transaction server and/or sent to the user.

11. Transaction computer server as claimed in claim 7, **characterised in that,** at least one user can access at least one said account with at least one credit card and/or at least one computer terminal.

12. A payment card arranged to access at least one transaction computer server of claim 7.

13. A payment card reader arranged to access at least one transaction computer server of claim 7.

14. A payment card comprising memory, **characterised in that,**
- the payment card is arranged to receive a data update from a network server,
- the payment card is arranged to store said data into memory,
- the said data update is arranged to be used in controlling financial transaction setup between the user of the card and merchants accepting the card.

15. A payment card reader comprising memory, **characterised in that,**
- the payment card reader is arranged to receive a data update from a network server,
- the payment card reader is arranged to store said data into memory,
- the said data update is arranged to be used in controlling financial transaction setup between a user of a payment card and the merchant accepting the card.

16. A payment card, comprising a memory chip 110, **characterised in that,** the memory chip 110 is arranged to be inserted into a card reader in a mobile phone.
